# EUROPÄISCHE PATENTANMELDUNG

(11) **EP 4 729 793 A1**
(43) Veröffentlichungstag der Anmeldung: **22.04.2026**
(21) Anmeldenummer: 25208115.3
(22) Anmeldetag: 10.10.2025
(51) Int. Cl.: F16B 2/24, F16B 21/07, F16B 37/04, F16B 43/00

(54) **KLAMMER ZUM HALTEN VON MONTAGESCHIENEN AN BEFESTIGUNGSELEMENTEN UND DAMIT GEBILDETES BEFESTIGUNGSSYSTEM**

(30) Priorität: 18.10.2024 DE 102024130428
(71) Anmelder: MÜPRO Services GmbH, 65205 Wiesbaden (DE)
(72) Erfinder: Alt, Janosch, 66557 Illingen (DE)
(74) Vertreter: Boult Wade Tennant LLP

(57) **Zusammenfassung**

Eine Halteklammer (10) dient zum Halten von Montageschienen (12) mit einem Grundelement (32) zur Auflage auf einer Montageschiene (12) und zwei federnden Seitenarmen (34) zum klemmenden Übergreifen der Montageschiene (12) , wobei mittig in dem Grundelement (32) eine Durchgangsöffnung (36) zum Durchführen eines Befestigungselements (22) vorgesehen ist. Um den Montageablauf zu vereinfachen und eine Vormontagestellung zu ermöglichen, ist vorgesehen, dass am Rand der Durchgangsöffnung (36) zwei oder mehr radial nach innen weisende Federzungen (38) mit freien Enden (40) vorgesehen sind, wobei die Abstände der Enden (40) zwischen sich wenigstens teilweise kleiner sind als der Querschnitt des Befestigungselements (22).

## Beschreibung

Die Erfindung betrifft gemäß dem Oberbegriff von Anspruch 1 eine Klammer zum Halten von Montageschienen mit einem Grundelement zur Auflage auf einer Montageschiene und zwei federnden Seitenarmen zum klemmenden Übergreifen der Montageschiene, wobei mittig in dem Grundelement eine Durchgangsöffnung zum Durchführen eines Befestigungselements vorgesehen ist. Gegenstand der vorliegenden Erfindung ist auch ein aus diesen Elementen bestehendes Befestigungssystem.

Insbesondere bei der Installation von Montageschienen, wie beispielsweise Montageschienen auf Schiffen oder für Rohr- sowie Elektroinstallationsarbeiten, ist die Arbeit häufig auf sehr beengtem Raum durchzuführen. Durch den Einsatz von Werkzeug und die Notwendigkeit der Ausrichtung der Montageschiene vor der festen Installation ist es meist notwendig, dass mehrere Personen die Arbeiten durchführen. Auf ohnehin beengtem Raum schränkt jede weitere Person die Bewegungsfreiheit zusätzlich ein. Gelegentlich mangelt es auch an geeignetem Werkzeug, das dann erst gesucht werden muss, oder es stehen keine weiteren Hilfskräfte zur Verfügung.

Bei der Installation von Montageschienen ist eine einfache und schnelle Arbeit von Vorteil für die ausführenden Personen. Eine Zeitersparnis bei der Montage bedeutet eine Kostenersparnis. Eine einfach durchzuführende Montage bedeutet, dass die Befestigung im Sinne der optimalen Verwendung der Bauteile eingesetzt wird und dass auch ungeschulte Personen diese Bauteile im richtigen Sinne anbringen können.

Insbesondere dann, wenn solche Montageschienen an Raumdecken zu installieren sind, muss bei der Montage über Kopf gearbeitet werden. Dies ist bedingt durch die Körperhaltung anstrengender als Installationsarbeiten auf anderer Arbeitshöhe und erfordert häufig ebenfalls die Hinzunahme mindestens einer weiteren Person zur Unterstützung. Je mehr Arbeitskräfte für derartige Montagemaßahmen benötigt werden, desto zeit- und kostenintensiver gestalten sich diese.

Nicht alle Installations- und Befestigungssysteme sind dazu geeignet, Lasten an Wänden, Böden und/oder Decken zu befestigen. Manche sind beispielsweise nur für Stützlasten, nicht aber für Hängelasten ausgerichtet. Zudem ist meist die Zuhilfenahme von Werkzeug zur Anbringung nötig.

Es ist daher die Aufgabe der vorliegenden Erfindung, eine Klammer sowie ein Befestigungssystem bereitzustellen, die dazu geeignet sind, Montagearbeiten zu erleichtern und Montageschienen werkzeuglos insbesondere an deckenseitig angeordneten Bolzen oder Ankern, aber auch an Böden und/oder Wänden vorab zu fixieren, bevor abschließend dann eine an den Lastfall angepasste, entsprechend stabile Verschraubung erfolgt.

Erfindungsgemäß wird die Aufgabe durch eine Klammer der eingangs genannten Art gelöst, bei welcher am Rand der Durchgangsöffnung zwei oder mehr radial nach innen weisende Federzungen mit freien Enden vorgesehen sind, wobei die Abstände der Enden zueinander wenigstens teilweise kleiner sind als der Querschnitt des Befestigungselements.

Die erfindungsgemäße Lösung bietet den Vorteil, dass zur Vormontage zunächst die Klammern auf die Montageschiene aufgesetzt werden können. Alternativ können die Klammern auch zunächst auf die Befestigungselemente aufgesteckt werden. Bei der Vormontage zunächst auf der Montageschiene werden die Klammern derart auf der Montageschiene aufgesteckt, bei C-förmigen Montageschienen in der Regel auf den Rücken, also auf der dem Montageschlitz abgewandten Seite, dass die Durchgangsöffnung im Grundelement mit jeweils einer Bohrung im Grundkörper in der Montageschiene fluchtet oder auch auf ein Längsloch ausgerichtet ist, so dass ein freier Durchsteckbereich entsteht.

Während die Klammer -in der Regel wenigstens zwei pro Montageschiene- durch ihre Klemmkräfte die Schiene hält, werden die Federzungen beim Aufstecken der Klammern durch die Befestigungselemente aufgeweitet, so dass sich die Montageschiene bis zu einem Anschlag oder auch eine beliebige Zwischenstellung aufschieben lässt. Ein Zurückrutschen wird beim Loslassen der Montageschiene dadurch verhindert, dass ich die Federzungen mit ihren Enden gegen die Außenfläche verkrallen. Bei glatten Außenflächen des Befestigungselements kann dies durch entsprechend scharfkantige Ausbildung der Enden der Federzungen gefördert werden, in den meisten Fällen ist das Befestigungselement aber ohnehin mit einem Außengewinde versehen, so dass sich die Federzungen auch ohne besondere Gestaltung der Kanten in den Gewindegängen abstützen können. Da der freie Durchmesser zwischen den Enden der Federzungen kleiner als der Durchmesser des Befestigungselements ist, bei Gewinden vorzugsweise auch kleiner als der Innenddurchmesser des Gewindes, können die Federzungen unter den nur geringen Kräften des Vormontagezustandes nicht bis in ihre Nulllage zurückbewegt werden, in welcher sie parallel zum Grundelement liegen würden.

Ein Monteur kann also die mit den Klammern versehene Montageschiene mit beiden Händen sicher fassen und auf die Befestigungselemente aufstecken, die beispielsweise durch an eine Metalldecke oder -wand angeschweißte oder dort verschraubte Gewindebolzen ausgebildet sind, wie dies z.B. beim Schiffsbau oder in Industrieanlagen üblich ist. Abschließend kann er die nun bereits durch die Klammer gehaltene Montageschiene mit beiden zur Verfügung stehenden Händen endgültig verschrauben.

Wie bereits erwähnt, kann die Montage auch in umgekehrter Reihenfolge erfolgen, d.h. zunächst werden die Halteklammern auf die Befestigungselemente aufgesteckt, bevor dann die Schiene zwischen Seitenarmen der vormontierten Halteklammern verklemmt wird.

Für den bereits erörterten Fall, dass die Befestigungselemente als zylindrische Elemente ausgebildet sind, z.B. als Stehbolzen oder Gewindezapfen, ist es bevorzugt, dass die Enden der Federzungen mittig einen kreisförmigen Querschnitt beschreiben, der kleiner als der Durchmesser eines zylindrischen Befestigungselements ist. Durch diese Ausbildung erreicht man einen besonders gleichmäßigen Halt und es erfolgt gleichzeitig eine Zentrierung des Befestigungselements zwischen den Federzungen.

Grundsätzlich sind aber auch andere Anordnungen der Federzungen mit anderen Öffnungsquerschnitten insbesondere dann möglich, wenn die Befestigungselemente keine kreisförmigen Querschnitte besitzen und die endgültige Befestigung dann in anderer Weise erfolgt als durch das Aufschrauben einer Mutter, z.B. durch Verschweißen mit der Montageschiene.

Eine weiter bevorzugte Ausführungsform der Erfindung sieht vor, dass die Federzungen eine Krümmung aus der Ebene des Grundelements in die Richtung der Seitenarme aufweisen. Durch diese Ausgestaltung befinden sich die Federzungen bereits anfänglich näher an einer Ideallage zum späteren Halten der Montageschiene, so dass eine geringere Verformung bis zur Vormontagestellung ermöglicht ist.

Für die Ausgestaltung der Federzungen sind verschiedene Formgebungen möglich, um den zuvor genannten Effekt noch zu steigern. So kann vorgesehen sein, dass die Neigung der Federzungen in Bezug auf das Grundelement an den Enden größer als an Anbindungstellen an dem Grundelement ist.

Dies kann beispielsweise dadurch erreicht werden, dass die Federzungen eine zu den Enden hin kontinuierlich oder in Stufen zunehmende Neigung in Bezug auf das Grundelement besitzen.

In einer besonders bevorzugten Ausführungsform der Erfindung ist vorgesehen, dass wenigstens die Federzungen und die Seitenarme der Klammer aus blechförmigem Federstahl besteht.

Federstahl hat für den vorliegenden Anwendungsfall optimale Eigenschaften, da sich alleine durch die Formgebung die gewünschten Klemmkräfte zwischen der Klammer und der Montageschiene einerseits und zwischen den Federzungen und dem Befestigungselement andererseits konstruktiv gut einstellen lassen und auch garantiert ist, dass die Klemmkräfte wegen praktisch ausschließlich elastischen Formänderungsanteils auch über längere Zeit erhalten bleiben.

Es hast sich als vorteilhaft erwiesen, dass auf der der Montageschiene angewandten Seite des Grundelements eine Unterlegscheibe vorgesehen ist, deren mittige Bohrung wenigstens teilweise größer ist als der Querschnitt zwischen den Enden der Federzungen. Diese Unterlegscheibe, die auch dicker in der Form eines Sockels ausgebildet sein kann, kann dazu vorgesehen sein, sich an einem im Bereich des Befestigungselements vorgesehenen massiven Anschlag oder auch unmittelbar an einer Wand oder Decke anzulegen. Dadurch können bei der Endmontage die hohen Spannkräfte der Befestigungsmutter besser gleichmäßig abgeleitet werden

Um die Unterlegscheibe oder den gebohrten Sockel für die Vormontagezwecke sicher an der Klammer festlegen zu können, ist weiterhin vorgesehen, dass an dem Grundelement Haltearme zum Halten der Lochscheibe vorgesehen sind. Grundsätzlich können hier aber auch andere Befestigungsarten gewählt werden, die sicherstellen, dass die Lochscheibe bis zum endgültigen Erreichen der Endmontagestellung sicher in ihrer Position verbleibt. Dies könnte ggf. auch durch ein Verkleben oder sonstige Befestigungsarten erreicht werden.

Wie eingangs bereits erwähnt, ist es auch Gegenstand der vorliegenden Erfindung, ein Befestigungssystem zu schaffen, das im Sinne der Aufgabe eine einfachere Montage erlaubt, Ein solches Befestigungssystem besteht aus decken-, boden- oder wandseitig anzubringenden Befestigungselementen, einer oder mehreren Montageschienen und einer geeigneten Anzahl von Befestigungselementen zugeordneten, erfindungsgemäßen Klammern, wie sie zuvor eingehend erörtert worden sind. Die Montage des Gesamtsystems ist zuvor ebenfalls bereits ausführlich erörtert worden.

Das erfindungsgemäße Befestigungssystem eignet sich ohne weiteres für übliche Formate von Montageschienen, wobei vorzugsweise wenigstens eine Montageschiene einen im Wesentlichen U-förmigen oder C-förmigen Querschnitt aufweist, deren Montageschlitz auf der den Grundelementen der Klammern abgewandten Seite liegt.

In einer besonders häufig anzutreffenden Ausführungsform der Erfindung ist vorgesehen, dass die Befestigungselemente wenigstens teilweise als Gewindestangen ausgebildet sind, die in einem Endmontagezustand mit Hilfe jeweils einer Mutter gegen die Montageschiene verschraubt sind. Grundsätzlich sind aber auch andere Formen von Befestigungselementen zum Einsatz bei einem erfindungsgemäßen Befestigungssystem geeignet, wobei endsprechend geeignete Montageelemente für die Endmontage zum Einsatz kommen können, wobei auch ein Verschweißen von Elementen zur dauerhaften Befestigung möglich ist.

In einer weiteren Ausführungsform der Erfindung ist es zur Vergleichmäßigung der Krafteinleitung bevorzugt, dass zwischen der Mutter und der Montageschiene jeweils wenigstens ein Zwischenelement vorgesehen ist.

In einer bevorzugten Weiterbildung des Zwischenelements ist vorgesehen, dass zwischen wenigstens einer Mutter und der Montageschiene eine Unterlegplatte mit einer parallelogrammartigen Grundfläche als Zwischenelement vorgesehen ist, wobei der Abstand der Schmalseiten kleiner als die Breite der Öffnung der Montageschiene und die Länge größer als die Innenbreite der Montageschiene ist.

Durch die seitliche innenseitige Abstützung an den Schenkeln der Montageschiene entsteht ein besserer Halt, wenn sich die Unterlegplatte beim Anziehen der Mutter zum Erreichen der Endmontagestellung verdreht. Wenn Kräfte stoßartig auf das Befestigungssystem wirken, kann die Unterlegplatte dazu dienen, Beschädigungen an einzelnen Bestandteilen des Installations- und Befestigungssystems zu verhindern. Beispielsweise können so Stöße abgefedert werden, die sonst das Befestigungselement unmittelbar belasten könnten. Dadurch wird die Langlebigkeit erhöht und das System um einen zusätzlichen Schutz erweitert. Das Befestigungssystem eignet sich - wie bereits erwähnt - unter anderem für den Schiffsbau und durch den Einsatz der Unterlegplatte ist es besser abgesichert für ruckartige Richtungsänderungen eines Schiffes, beispielsweise ausgelöst durch hohen Seegang oder auch unerwartete Kollisionen.

In einer besonders bevorzugten Ausführungsform der Erfindung ist weiterhin vorgesehen, dass die Unterlegplatten an den Rändern gegenüberliegende Schrägflächen aufweisen, deren Neigung an einen maximalen Drehwinkel der Unterlegplatten bei der Montage derart angepasst ist, dass sich die Schrägflächen in der Endstellung vollflächig an die Innenflanken der Schenkel der Montageschiene anlegen.

Die vollflächige Anlage der Schrägflächen sorgt für eine besonders gute Krafteinleitung, um die Gefahr von Beschädigungen durch stoßartige Belastungen weiter zu reduzieren.

Weitere Merkmale, Einzelheiten und Vorteile der Erfindung ergeben sich aus dem Wortlaut der Ansprüche sowie aus der nachfolgend anhand der Zeichnung beschriebenen Ausführungsbeispiel. Es zeigen:
Fig. 1 eine perspektivische Ansicht einer Halteklammer mit einem deckenseitig vorgesehenen Befestigungsbolzen;
Fig. 2 eine perspektivische Ansicht eines Befestigungssystems mit einer Klammer nach Fig. 1;
Fig. 3 das Befestigungssystem nach Fig. 2 in einer vorläufigen Montagestellung.

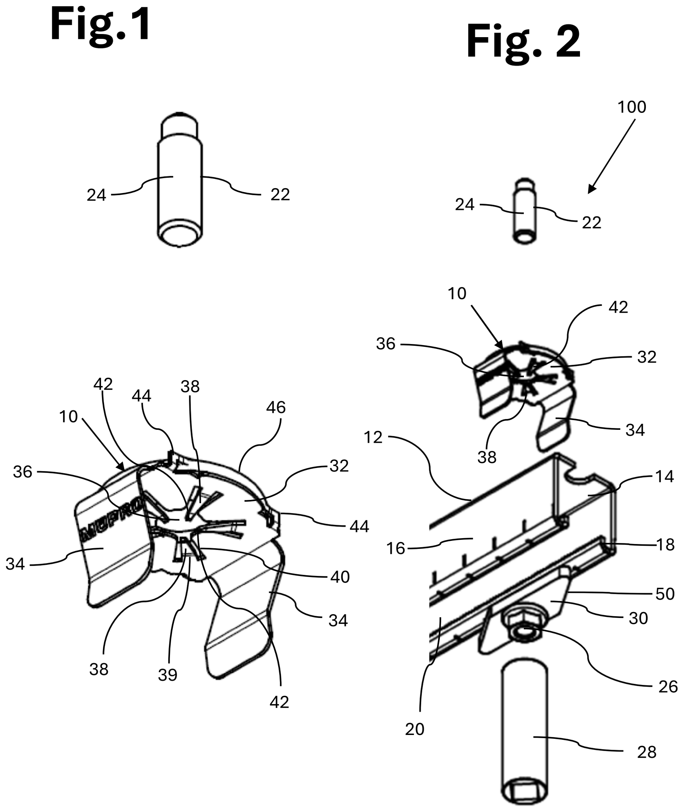

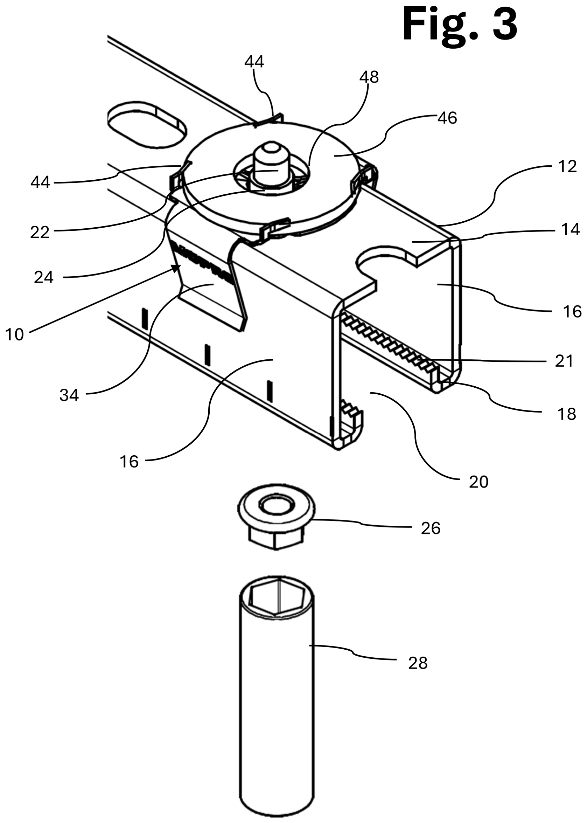

In Fig. 1 ist eine Halteklammer 10 gezeigt, die als Teil eines Befestigungssystems 100 eine vorläufige Halterung einer Montageschiene 12 (siehe Fig. 2 und 3) ermöglicht, die hier mit einem C-förmigen Querschnitt mit einem Grundkörper 14 und zwei seitlichen Schenkeln 16 ausgebildet ist, deren Enden 18 nach innen weisen und umgebördelt sind. Zwischen den umgebördelten Enden 18 verbleibt ein Montageschlitz 20. Die Enden der Schenkel können bei anderen Ausführungsformen auch eine Verzahnung aufweisen und/oder nicht umgebördelt sein, somit also einen dann U-förmigen Querschnitt haben.

Wie in Fig. 3 gut zu erkennen ist, ist bei dem gezeigten Ausführungsbeispiel eine Verzahnung 21 an den umgebördelten Enden 18 vorgesehen.

Derartige Befestigungssysteme werden unter anderem im Schiffsbau eingesetzt, wobei ein z.B. deckenseitig vorgesehener Befestigungsbolzen 22 als Gewindebolzen mit einem Außengewinde 24 ausgebildet ist. Mit diesem wird die bereits erwähnte Montageschiene 12 abschließend verschraubt, wobei eine Mutter 26 mittels eines geeigneten Schraubwerkzeuges 28, das in Fig. 2 als Steckschlüssel gezeigt ist, von unten zwischen den Schenkeln 16 auf den Gewindebolzen 22 aufgeschraubt wird und die Montageschiene 12 gegen einen geeigneten Anschlag unterhalb der Decke oder gegen die Decke selbst verspannt wird.

Zur Verbesserung der Kraftableitung und -einleitung kann eine Unterlegplatte 30 zwischen der Mutter 26 und der Unterseite des Grundkörpers 14 vorgesehen sein, auf deren mögliche besondere Form später noch eingegangen wird.

Die Klammer 10 dient dazu, die Montageschiene 12 vorläufig an den meist wenigstens zwei deckenseitigen Befestigungsbolzen 22 verklemmen. Die Klammer weist ein Grundelement 32 mit Seitenarmen 34 auf, deren Abstand im Ausgangszustand kleiner als die Breite der Montageschiene 12 gewählt ist. Das Grundelement 32 und die beiden Seitenarme sind einstückig aus Federstahl hergestellt.

Mittig in dem Grundelement 32 ist eine Durchgangsöffnung 36 vorgesehen, an deren Rand über den Umfang verteilt hier fünf mit ihren freien Enden radial nach innen weisende Federzungen 38 angeordnet sind.

Anbringungspunkte 39 der Federzungen 38 sind hier vom eigentlichen Durchmesser der Durchgangsöffnung 36 radial entfernt außen in Schlitzen 40 vorgesehen, um einen geeigneteren Federweg zur Verfügung zu stellen, dies kann jedoch je nach Wahl des Durchmessers konstruktiv auch anders gelöst sein.

Die radial innenlegenden Enden 42 der Federzungen beschreiben zwischen sich einen Kreis, dessen Durchmesser kleiner ist als der Außendurchmesser des Befestigungsbolzens, bei einem Gewindebolzen ist der Durchmesser kleiner als der Außendurchmesser des Gewindes 24 ausgebildet, beispielsweise entsprechend dessen Innendurchmesser oder kleiner.

Wie in Fig. 1 zu erkennen ist, sind die Federzungen in der Ausgangsposition nach untern zwischen die Seitenarme 34 gekrümmt ausgeführt, d.h. der durch die Enden 42 der Federzungen beschriebene Kreis liegt unterhalb des Grundelements 32 zwischen den Seitenarmen 34.

Auf der der Decke zugewandten Seite sind an dem Grundelement 32 vier Halteösen 44 vorgesehen, die zwischen sich eine Unterlegscheibe 46 halten. Diese besitzt eine mittige Bohrung 48, die größer als der Außendurchmesser des Befestigungsbolzens 22 ist. Die Unterlegscheibe dient erstens als Anschlag für die Vormontagestellung gegen einen deckenseitigen Gegenanschlag oder die Decke selbst und verbessert in der Endmontagstellung die Krafteinleitung.

Nachfolgend wird der Montageablauf ausgehend von Fig. 2 erläutert, wobei der Befestigungsbolzen 22 deckenseitig befestigt, im Schiffsbau typischerweise mit der Decke verschweißt ist.

Grundsätzlich ist es möglich, die Halteklammer 10 zunächst auf die Montageschiene 12 aufzusetzen, es kann aber auch im ersten Schritt ein Aufstecken auf den Befestigungsbolzen 22 erfolgen.

Bei diesem Aufstecken auf den Befestigungsbolzen 22 weitet das Außengewinde 24 den zwischen den Enden 42 der Federzungen 38 beschriebenen Kreis auf, wobei diese nach unten zwischen die Seitenarme 34 ausweichen können. Der Weg des Aufsteckens wird dadurch begrenzt, dass sich die Unterlegscheibe 46 gegen einen deckenseitigen Anschlag anlegt, es ist aber nicht zwingend, die Klammer 10 bis zu einem Anschlag aufzustecken. Ein Abziehen der Halteklammer 10 ist nach dem Aufstecken nicht mehr ohne weiteres möglich und erfordert einen erhöhten Kraftaufwand, da die Federzungen über ihren Totpunkt in der Ebene des Grundelements 32 bewegt werden müssten, was nur unter einer erheblichen, kraftaufwändigen Verformung der Federzungen selbst möglich wäre.

Der Schritt des Aufsteckens der Halteklemmern 10 wird zunächst für wenigsten alle Befestigungsbolzen 22 durchgeführt, die einer nachfolgend vorzumontierenden Montageschiene 12 zugeordnet sind.

Im nächsten Schritt wird nun die Montageschiene 12 mit ihrem Grundkörper 14 voran von unten zwischen die Seitenarme 34 der Klammern 10 eingedrückt, wobei sich die Seitenarme 34 elastisch aufbiegen und die Schenkel der Montageschiene 12 von außen verklemmen. Die Klemmkräfte sind selbstverständlich so bemessen, dass sie das Eigengewicht der Montageschiene an die Befestigungsbolzen ableiten können. Gleiches trifft natürlich auch auf die Federzungen 38 zu, die in das Außengewinde 24 eingreifen.

Die Montageschiene kann auch dann noch axial verschoben werden, wenn die Seitenarme der Klammer 10 bereits über ihre Schenkel greifen, damit der Befestigungsbolzen durch eine Bohrung im Grundkörper 14 der Montageschiene 12 geführt werden kann.

Da die Klemmkräfte der Halteklammern 10 die Montageschiene 12 bereits in ihrer gewünschten Position vorfixieren, kann ein Monteur nachfolgend ohne weitere Hilfskräfte oder sonstige Hilfsmaßnahmen die finale Befestigung der Montageschiene 12 an der Decke vornehmen, indem er die Muttern 26 mit dem Werkzeug 28 auf die Außengewinde 24 der Befestigungsbolzen 22 aufschraubt und auf das gewünschte Drehmoment anzieht.

Dies erfolgt bevorzugt mit den bereits angesprochenen Unterlegplatten 30 zwischen den Muttern 26 und der Unterseite des Grundkörpers 14 der Montageschiene 12.

Die Unterlegplatten 30 besitzen eine parallelogrammartige, längliche Grundfläche mit an den Enden ausgebildeten Schrägflächen 50. Die Breite der Unterlegplatten 30 ist so bemessen, dass sie in den Schlitz 20 eingesetzt werden können, während ihre Länge größer als die Innenbreite der Montageschiene 12 ist. Beim anschließenden Festschrauben der Mutter 26 verdreht sich die jeweilige Unterlegplatte 30, wobei der Drehwinkel durch die Länge der Unterlegplatte 30 beschränkt ist. Die Neigung der Schrägflächen 50 ist so gewählt, dass sich diese beim Erreichen des maximalen Drehwinkels im Wesentlichen flächig an die Innenseiten der Schenkel 16 der Montageschiene 12 anlegen, wodurch eine besonders gleichmäßige Krafteinleitung bei Extrembeanspruchung erreicht wird.

Die Erfindung ist nicht auf eine der vorbeschriebenen Ausführungsformen beschränkt, sondern in vielfältiger Weise abwandelbar.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Halteklammer
- 12: Montageschiene
- 14: Grundkörper
- 16: Schenkel
- 18: Enden der Schenkel
- 20: Montageschlitz
- 21: Verzahnung
- 22: Befestigungselement
- 24: Außengewinde
- 26: Mutter
- 28: Schraubwerkzeug
- 30: Unterlegplatte
- 32: Grundelement
- 34: Seitenarme
- 36: Durchgangsöffnung
- 38: Federzungen
- 39: Anbringungspunkte
- 40: Schlitze
- 42: Freie Enden der Federzungen
- 44: Halteösen
- 46: Unterlegscheibe
- 48: Bohrung der Unterlegscheibe
- 50: Schrägflächen
- 100: Befestigungssystem

## Patentansprüche

1. Klammer (10) zum Halten von Montageschienen (12) mit einem Grundelement (32) zur Auflage auf einer Montageschiene (12) und zwei federnden Seitenarmen (34) zum klemmenden Übergreifen der Montageschiene (12) , wobei mittig in dem Grundelement (32) eine Durchgangsöffnung (36) zum Durchführen eines Befestigungselements (22) vorgesehen ist, **dadurch gekennzeichnet, dass** am Rand der Durchgangsöffnung (36) zwei oder mehr radial nach innen weisende Federzungen (38) mit freien Enden (40) vorgesehen sind, wobei die Abstände der Enden (40) zueinander wenigstens teilweise kleiner sind als der Querschnitt des Befestigungselements (22).

2. Klammer nach Anspruch 1, **dadurch gekennzeichnet, dass** die Enden (40) der Federzungen (38) mittig einen offenen Querschnitt beschreiben, der kleiner als der Durchmesser eines zylindrischen Befestigungselements (22) ist.

3. Klammer nach Anspruch 1 oder 2, **dadurch gekennzeichnet, dass** die Federzungen (38) eine Krümmung aus der Ebene des Grundelements (32) in die Richtung der Seitenarme (34) aufweisen.

4. Klammer nach Anspruch 3, **dadurch gekennzeichnet, dass** die Neigung der Federzungen (38) in Bezug auf das Grundelement (32) an den Enden größer als an Anbringungspunkten (39) an dem Grundelement (32) ist.

5. Klammer nach Anspruch 4, **dadurch gekennzeichnet, dass** die Federzungen (38) eine zu den freien Enden (40) hin kontinuierlich oder in Stufen zunehmende Neigung in Bezug auf das Grundelement (32) besitzen.

6. Klammer nach einem der vorgehenden Ansprüche, **dadurch gekennzeichnet, dass** wenigstens das Grundelement (32) mit den Federzungen (38) und die Seitenarme (34) die aus blechförmigem Federstahl besteht.

7. Klammer nach einem der vorhergehenden Ansprüche, **dadurch gekennzeichnet, dass** auf der der Montageschiene (12) abgewandten Seite des Grundelements eine Unterlegscheibe (46) vorgesehen ist, deren mittige Bohrung (48) wenigstens teilweise größer ist als der Querschnitt zwischen den Enden (40) der Federzungen (38).

8. Klammer nach Anspruch 7, **dadurch gekennzeichnet, dass** an dem Grundelement (32) Haltearme (44) zum Halten der Unterlegscheibe (46) vorgesehen sind.

9. Befestigungssystem bestehend aus decken-, boden- oder wandseitig anzubringenden Befestigungselementen (22), einer oder mehreren Montageschienen (12) und einer Anzahl von den Befestigungselementen (22) zugeordneten Klammern (10) nach einem der Ansprüche 1 bis 8.

10. Befestigungssystem nach Anspruch 9, **dadurch gekennzeichnet, dass** die wenigstens eine Montageschiene (12) einen im Wesentlichen U- oder C-förmigen Querschnitt aufweist, deren Montageschlitz (20) auf der den Grundelementen (32) der Klammern (10) abgewandten Seite liegt.

11. Befestigungssystem nach Anspruch 10, **dadurch gekennzeichnet, dass** die Befestigungselemente (22) wenigstens teilweise als Gewindestangen ausgebildet sind, die in einem Endmontagezustand mit Hilfe jeweils einer Mutter (26) gegen die Montageschiene verschraubt sind.

12. Befestigungssystem nach Anspruch 11, **dadurch gekennzeichnet, dass** zwischen der Mutter (26) und der Montageschiene (12) jeweils wenigstens ein Zwischenelement vorgesehen ist.

13. Befestigungssystem nach Anspruch 12, **dadurch gekennzeichnet, dass** zwischen wenigstens einer Mutter (26) und der Montageschiene (12) eine Unterlegplatte (30) mit einer parallelogrammartigen Grundfläche vorgesehen ist, wobei der Abstand der Schmalseiten kleiner als die Breite des Montageschlitzes (20) der Montageschiene (12) und die Länge größer als die Innenbreite der Montageschiene (12) ist.

14. Befestigungssystem nach Anspruch 13, **dadurch gekennzeichnet, dass** die Unterlegplatten (30) an den Rändern gegenüberliegende Schrägflächen (48) aufweisen, deren Neigung an einen maximalen Drehwinkel der Unterlegplatten (30) bei der Montage derart angepasst ist, dass sich die Schrägflächen (48) in der Endstellung vollflächig an die Innenflanken der Schenkel (14) der Montageschiene (12) anlegen.
